# EUROPÄISCHE PATENTSCHRIFT

(11) **EP 0 748 531 B1**
(45) Veröffentlichungstag und Bekanntmachung des Hinweises auf die Patenterteilung: **22.07.1998**
(21) Anmeldenummer: 95941054.9
(22) Anmeldetag: 30.11.1995
(51) Int. Cl.: H02G 3/12

(54) **BEFESTIGUNGSSCHIENE ZUR MONTAGE VON INSTALLATIONSKANALDOSEN IN EINEM INSTALLATIONSKANAL**
SECURING RAIL FOR FITTING CASES IN A CABLE TRAY
RAIL DE FIXATION POUR LE MONTAGE DE LOGEMENTS DANS UN CHEMIN DE CABLES

(30) Priorität: 29.12.1994 DE 9420886 U
(43) Veröffentlichungstag der Anmeldung: 18.12.1996
(73) Patentinhaber: Albert Ackermann GmbH & Co. KG, 51643 Gummersbach (DE)
(72) Erfinder: FASTENROTH, Kurt-Helmut, D-51647 Gummersbach (DE)
(74) Vertreter: Wilhelm, Hans-Herbert, Dr.-Ing.
(86) Internationale Anmeldenummer: EP9504707
(87) Internationale Veröffentlichungsnummer: WO9621261

(56) Entgegenhaltungen:
- EP-A- 0 242 645
- EP-A- 0 392 955
- DE-U- 7 728 531
- DE-U- 8 708 607

## Beschreibung

Die Erfindung betrifft eine Befestigungsschiene zur Montage von Installationskanaldosen in einem Installationskanal, insbesondere Wand- oder Brüstungskanal, bestehend aus einem im Querschnitt C-förmigen, einseitig offenen Profil, das an der geschlossenen Seite mit einem senkrecht abragenden Befestigungssteg zur Anbringung am Boden des Installationskanales und mit an beiden Schenkeln des C-Profiles senkrecht zu den Schenkeln verlaufenden und nach beiden Seiten über die Schenkel überstehenden Auflagestegen versehen ist, von denen mindestens einer von einer Kralle der auf den Auflagestegen aufsitzenden Installationskanaldose untergriffen wird.

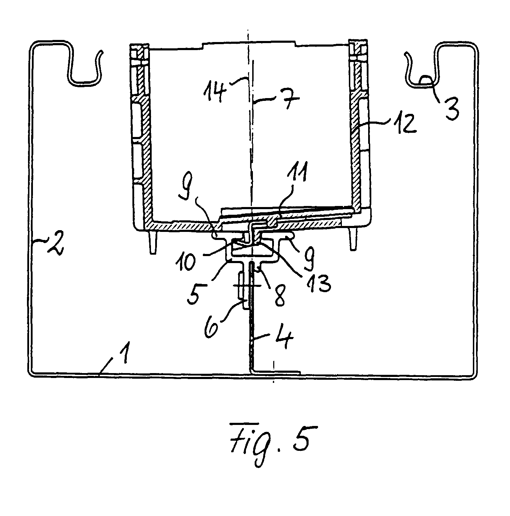

In Wand- oder Brüstungskanälen, wie sie beispielsweise aus dem Gebrauchsmuster 87 08 607 bekannt sind, werden Befestigungsschienen zum Einsetzen von Installationskanaldosen verwendet, wie sie in Fig. 5 gezeigt sind. Bei solchen auf dem Markt befindlichen Bauarten (Wand- und Brüstungskanal der Anmelderin) können bei ungünstiger Toleranzlage die Befestigungskrallen der Installationskanaldosen die letzteren beim Befestigen schiefziehen, so daß eine Parallelität zwischen der Oberkante der Installationskanaldose und damit des Installationsgerätes und der Kanaloberkante nicht erreicht wird. Dies kann beim Einbau von Installationsgeräten zu gewissen Schwierigkeiten führen.

Der vorliegenden Erfindung liegt die Aufgabe zugrunde, eine Befestigungsschiene der eingangs genannten Art so auszubilden, daß bei Beibehaltung der bisherigen Befestigungsart ein schiefer Einbau von Installationskanaldosen sicher vermieden wird.

Dies wird bei einer Befestigungsschiene der eingangs genannten Art dadurch erreicht, daß jeder Auflagesteg mindestens an seinen äußeren Längskanten mit nach oben gerichteten, wulstartigen Erhöhungen versehen ist. Dadurch ergeben sich äußere Auflagen für den Boden der Installationskanaldose, der sich ohne die Gefahr eines Schrägstellens der Dose innen im Bereich der Befestigungskralle ausbeulen kann.

In Weiterbildung der Erfindung werden Erhöhungen an den inneren Längskanten nach innen in den Hohlraum des C-Profiles gerichtet, so daß sich Hinterschneidungen für die eingreifenden Krallen ergeben. Diese Ausführung führt dazu, daß die untergreifenden Krallen tiefer in den Hohlraum der Montageschiene und hinter die Hinterschneidung greifen können, so daß die mit den Krallen versehenen Befestigungsklammern der Installationskanaldosen parallel zur Bodenfläche des Wand- oder Brüstungskanales verlaufen und die zugecrdneten Installationskanaldosen und damit die darin eingebauten Installationsgeräte mit ihrer vorderen Stirnfläche auch parallel zu der Stirnfläche des Wand- oder Brüstungskanales verlaufen.

In Weiterbildung der Erfindung sind die in den Hohlraum gerichteten Erhöhungen höher als die nach außen gerichteten Erhöhungen und es kann vorgesehen werden, daß die Übergänge von den Erhöhungen zu den anderen Flächen der Auflagestege jeweils abgerundet ausgebildet sind. Diese Maßnahmen sichern einen guten Sitz der Krallen zu, wobei die nach außen gerichteten Erhöhungen auf der Schienenoberseite als Auflagesicherung für die Installationskanaldosen dienen und die ausgerichtete Lage sichern.

Die Erfindung ist anhand eines Ausführungsbeispieles in den Zeichnungen dargestellt und wird im folgenden erläutert. Es zeigen:
- Fig. 1: die schematische Darstellung eines Querschnittes durch einen Wand- oder Brüstungskanal, der mit einer erfindungsgemäßen Befestigungsschiene und einer in diese eingesetzten aber noch nicht montierten Installationskanaldose versehen ist,
- Fig. 2: eine Detaildarstellung der Befestigungsschiene des Installationskanales der Fig. 1,
- Fig. 3: den Wand- oder Brüstungskanal der Fig. 1, jedoch während des Befestigungsvorganges der Installationskanaldose an der Befestigungsschiene,
- Fig. 4: den Wand- oder Brüstungskanal mit der Installationskanaldose nach der Fig. 3 im Endzustand der Befestigung und
- Fig. 5: eine Darstellung eines Wand- oder Brüstungskanales nach dem Stand der Technik mit einer an seiner Befestigungsschiene angebrachten Installationskanaldose.

Aus der Fig. 5, die einen Wandkanal nach dem Stand der Technik zeigt, ist am Boden (1) eines U-profilartig aufgebauten Installationskanales (2), der in bekannter Weise an seiner offenen Seite mit nach außen offenen Rillen (3) zum Einsetzen einer Abdeckung versehen ist, eine Trennwand (4) mit einer daran befestigten Befestigungsschiene (5) vorgesehen, die ihrerseits aus einem C-Profil besteht, das an seiner geschlossenen Seite mit einem senkrecht abragenden Befestigungssteg (6) zum Befestigen an der Oberkante der Trennwand (4) versehen ist. Zwischen dem etwas außermittig angesetzten Befestigungssteg (6) und einer parallel zu ihm und spiegelsymmetrisch zu einer Mittellängsebene (7) angeordneten Rippe (8) ist eine Nut vorgesehen, die der Stärke der Trennwand (4) angepaßt ist, so daß die Befestigungsschiene (5) auf die Oberkante der Trennwand (4) aufgesetzt und dann befestigt werden kann.

Die Befestigungsschiene (5) ist an ihren beiden nach oben ragenden Schenkeln mit senkrecht zu diesen Schenkeln verlaufenden und nach beiden Seiten über die Schenkel überstehenden Auflagestegen (9) versehen, deren Wandstärke gleichmäßig ist und in etwa der Wandstärke der Schenkel und des Befestigungssteges (6) entspricht. Wie die Fig. 5 zeigt, greift in den Innenraum der Befestigungsschiene (5) eine Kralle (10) einer Befestigungsklammer (11) ein, mit deren Hilfe beim gezeigten Beispiel in bekannter Weise eine Installationskanaldose (12), in dem Kanal (2) befestigt wird. Die Befestigungsklammer (11) legt sich dabei mit einer Seite ihres aus dem Hohlraum der Befestigungsschiene (5) herausragenden Steges an die Innenseite eines an einem Auflagesteg (9) anliegenden Stecksteges (13) an und greift mit ihrem Krallenteil (10) unter den nach innen ragenden Teil des anderen Auflagesteges (9). Es hat sich gezeigt, daß sich der Boden (1) der aus Kunststoff bestehenden Installationskanaldose (12) durch die von der Befestigungskralle (10) ausgeübte Kraft verformt und nach unten ausbeult. Dies führt zusammen mit der außermittig am Auflagesteg (9) angreifenden Kraft dazu, daß die Installationskanaldose (12) mit ihrer Mittellängsebene (14) von der Mittellängsebene (7) abweicht und sich schiefstellt.

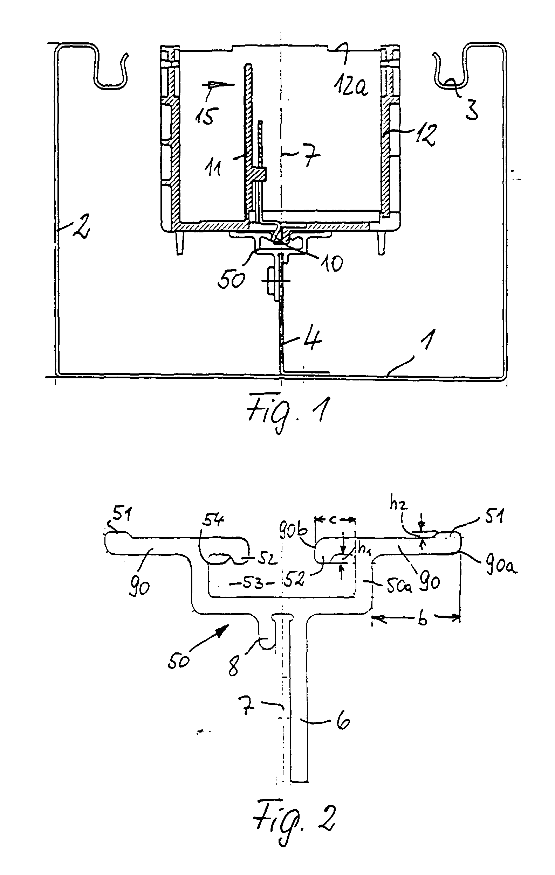

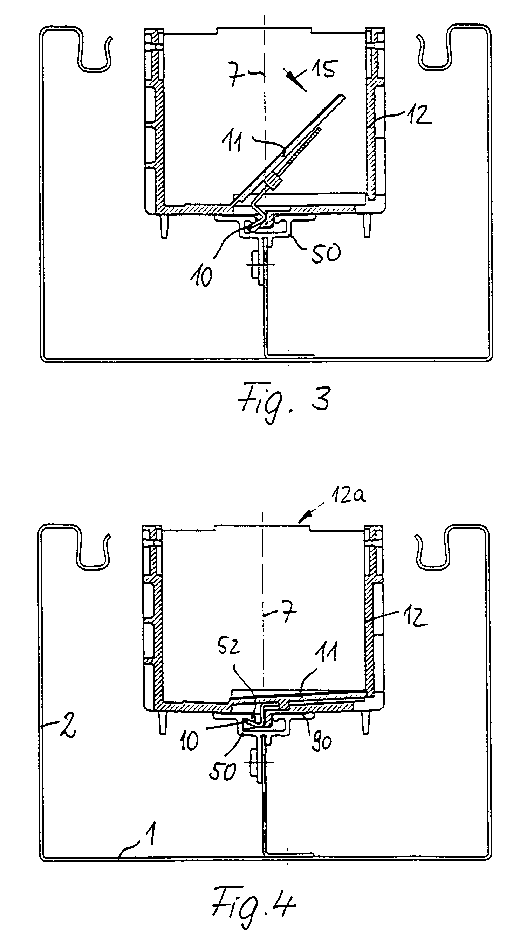

Nach den Fig. 1 bis 4 ist nun eine Befestigungsschiene (50) vorgesehen, die zwar im Prinzip so aufgebaut ist wie die Befestigungsschiene (5), aber vor allen Dingen an ihren Auflagestegen (90) entscheidend abweichend gestaltet ist. Die Auflagestege (90) besitzen, wie insbesondere Fig. 2 zeigt, wulstartige Erhöhungen (51 und 52), von denen die Erhöhungen (51) auf der äußeren Längskante (90a) der Auflagestege nach oben, d.h. in Richtung weg von dem Hohlraum (53) gerichtet sind. Die Erhöhungen (52) dagegen sind an der inneren Längskante (90b) der Auflagestege (90) zum Hohlraum (53) hin gerichtet. Die Ausbildung der Erhöhungen (51 und 52) und die Anordnung der Auflagestege (90) ist dabei symmetrisch zu der Längsmittelebene (7). Die äußeren Längskanten (90a) liegen dabei in einem Abstand (b) zu dem Schenkel (50a) der Befestigungsschiene (50), der größer ist als der Abstand (c) der Innenkante (90b) von dem Schenkel (50a). Durch diese Ausgestaltung gibt sich zum einen eine größere Ausladung des Auflagesteges und an der Stelle der größten Breite jeweils eine Auflageführung durch die wulstartigen Erhöhungen (51), wenn die Kanaldose (12) eingesetzt wird. Eine Durchbiegung des Bodens (1) der Installationskanaldose (12) kann daher zwischen den Erhöhungen (51) aufgenommen werden. Zum anderen aber ergibt sich auch durch die hinter der Erhöhung (52) im Inneren des Hohlraumes (53) gebildete Hinterschneidung eine größere Eingriffstiefe für die Kralle (10) der Klammer (11) - siehe Fig. 4 -, so daß nun die Befestigungskralle (10) am Wulst (52) und damit mehr in der Längsmittelebene (7) angreift und damit auch, wie Fig. 4 zeigt, die Installationskanaldose (12) mit ihrer Längsmittelebene mit der Längsmittelebene (7) zusammenfällt und mit ihrer äußeren Stirnseite (12a) fluchtend zu der Oberkante des Kanales (2) verlaufen kann.

Die Fig. 2 zeigt, daß die wulstartigen Erhöhungen (51 bzw. 52) jeweils abgerundet in die übrige Fläche des Auflagesteges (90) übergehen. Die Befestigungsschiene (50) läßt sich in bekannter Weise aus einem Metall mit dem in der Fig. 2 gezeigten Querschnitt strangpressen. Durch die Anordnung der wulstartigen Erhebungen (52) entsteht auf der dem Innenraum (53) zugewandten Innenseite des Profiles (50) jeweils eine Hinterschneidung (54), in die die aus Fig. 3 und 4 ersichtliche Kralle (10) der Befestigungsklammer (11) bei deren Schwenkbewegung im Sinn des Pfeiles (15) so eingreifen kann, daß die Klammer (11) parallel zum Boden (1) der Installationskanaldose (12) verläuft. Dabei sind die Hinterschneidungen (54) verhältnismäßig tief ausgebildet, weil die Höhe (h₁) der Erhöhungen (52) größer ausgebildet ist als die Höhe (h₂) der außenliegenden Erhöhungen (51).

Im befestigten Zustand nach Fig. 4 sorgen die beiden nach oben gerichteten Wülste (51) für eine gerade Auflage des Bodens (1) der Installationskanaldose (12) auf der Befestigungsschiene (50).

## Patentansprüche

1. Befestigungsschiene zur Montage von Installationskanaldosen in einem Installationskanal (2), insbesondere Wand- oder Brüstungskanal, bestehend aus einem im Querschnitt C-förmigen, einseitig offenen Profil (50), das an der geschlossenen Seite mit einem senkrecht abragenden Befestigungssteg (6) zur Anbringung am Boden (1) des Installationskanales (2) und mit an beiden Schenkeln des C-Profiles senkrecht zu den Schenkeln (50a) verlaufenden und nach beiden Seiten über die Schenkel überstehenden Auflagestegen (90) versehen ist, von denen mindestens einer von einer Kralle (10) der auf den Auflagestegen (90) aufsitzenden Installationskanaldose (12) untergriffen wird, dadurch gekennzeichnet, daß jeder Auflagesteg (90) mindestens an seinen äußeren Längskanten (90a, 90b) mit vom C-Profil weg nach außen gerichteten, wulstartigen Erhöhungen (51) versehen ist.

2. Befestigungsschiene nach Anspruch 1, dadurch gekennzeichnet, daß an den inneren Längskanten (90b) nach innen in den Hohlraum (53) des C-Profils gerichtete wulstartige Erhöhungen vorgesehen sind, so daß sich Hinterschneidungen für die eingreifenden Krallen (10) ergeben.

3. Befestigungsschiene nach Anspruch 2, dadurch gekennzeichnet, daß die in den Hohlraum (53) gerichteten Erhöhungen (52) eine größere Höhe (h₁) als die nach außen gerichteten Erhöhungen (51) aufweisen.

4. Befestigungsschiene nach Anspruch 1 und 2, dadurch gekennzeichnet, daß die Übergänge von den Erhöhungen (51, 52) zu den anderen Flächen der Auflagestege (90) abgerundet ausgebildet sind.

5. Befestigungsschiene nach Anspruch 1, dadurch gekennzeichnet, daß der Abstand (b) der äußeren Längsaußenkante (90a) des Auflagesteges (90) vom zugeordneten Schenkel (50a) größer ist als der Abstand (c) der inneren Längskante (90b) des Auflagesteges (90) vom Schenkel (50a).

## Claims

1. Fixing rail for the mounting of installation duct boxes in an installation duct (2), especially a wall or parapet mounted duct, consisting of a section (50) with C-shaped cross-section open on one side which is provided on the closed side with a perpendicularly projecting fixing web (6) enabling its attachment to the bottom (1) of the installation duct (2) and which, on both side-pieces (50a) of the C-section, is provided with support webs (90) extending perpendicularly to the side-pieces and projecting on both sides across them, at least one of the said support webs being engaged by a claw (10) of the installation duct box (12) resting on the support webs,
**characterized in that**
each support web (90) is provided at least along its outer longitudinal edges (90a, 90b) with bead-like ridges (51) projecting outwards away from the C-shaped section.

2. Fixing rail according to Claim 1,
**characterized in that**
bead-like ridges are provided along the inner longitudinal edges (90b) directed inwards towards the hollow space (53) of the C-section, so that overhangs are formed under which the claws (10) can engage.

3. Fixing rail according to Claim 2,
**characterized in that**
the ridges (52) directed inwards towards the hollow space (53) have a greater height (h₁) than the ridges (51) directed outwards.

4. Fixing rail according to Claims 1 and 2,
**characterized in that**
the transitions between the ridges (51, 52) and the remainder of the surfaces of the support webs (90) are rounded off.

5. Fixing rail according to Claim 1,
**characterized in that**
the distance (b) between the outer longitudinal edges (90a) of the support webs (90) and their associated side-pieces (50a) is larger than the distance (c) between the inner longitudinal edges (90b) of the support webs (90) and the side-pieces (50a).

## Revendications

1. Rail de fixation pour le montage de prises de gaines techniques dans une gaine technique (2), en particulier une gaine technique murale ou d'allège, constitué d'un profilé (50), ouvert vers un côté, ayant en coupe transversale la forme d'un C, profilé qui, sur son côté fermé, est pourvu d'une traverse de fixation (6), dépassant perpendiculairement, destinée à une application sur le fond (1) de la gaine technique (2), ainsi que de traverses d'appui (90), courant sur les deux branches du profilé en C perpendiculairement aux branches (50a) et dépassant des branches sur les deux côtés, traverses d'appui en-dessous d'au moins une desquelles passe un crampon (10) de la prise de gaine technique (12) destinée à venir se loger sur les traverses d'appui (90), caractérisé en ce que chaque traverse d'appui (90) est, au moins sur ses arêtes longitudinales extérieures (90a, 90b), pourvue de surélévations (51) en forme de bourrelet, dirigées vers l'extérieur du profilé en C.

2. Rail de fixation selon la revendication 1, caractérisé en ce que, sur les arêtes longitudinales intérieures (90b), sont prévues des surélévations en forme de bourrelet, dirigées vers l'intérieur vers la cavité (53) du profilé en C, de façon qu'il en résulte des contre-dépouilles pour les crampons (10) devant s'encliqueter.

3. Rail de fixation selon la revendication 2, caractérisé en ce que les surélévations (52) dirigées vers la cavité (53) ont une hauteur (h₁) supérieure à celle des surélévations (51) dirigées vers l'extérieur.

4. Rail de fixation selon la revendication 1 ou 2, caractérisé en ce que les transitions entre les surélévations (51, 52) et les autres surfaces des traverses d'appui (90) ont une configuration arrondie.

5. Rail de fixation selon la revendication 1, caractérisé en ce que la distance (b) entre l'arête longitudinale extérieure (90a) de la traverse d'appui (10) et la branche correspondante (50a) est supérieure à la distance (c) entre l'arête longitudinale intérieure (90b) de la traverse d'appui (90) et la branche (50a).
